# EUROPEAN PATENT APPLICATION

(11) **EP 3 508 961 A1**
(43) Date of publication of application: **10.07.2019**
(21) Application number: 19153172.2
(22) Date of filing: 12.06.2012
(51) Int. Cl.: G06F 3/041, G06F 1/16

(54) **TOUCH SCREEN PROTECTOR**

(30) Priority: 14.06.2011 US 201113160404; 24.05.2012 US 201213480093; 17.01.2012 WO PCT/US2012/021513
(62) Divisional of application: 12171588.2
(71) Applicant: Aevoe Corp., Sunnyvale, CA 94086 (US)
(72) Inventor: Leonhard, Michael, San Francisco, CA California 94086 (US); Lin, Jonathan, Mountain View, CA California 94041 (US); Huang, Steven, Taipei (TW)
(74) Representative: Holme Patent A/S

(57) **Abstract**

The invention relates to a touch screen protector (10) for a hand held device having a front face that includes a touch screen portion and a non-functional band. The touch screen protector of the invention comprises a film (30) having front and back sides, an outer perimeter and a transparent window (20), an exposed adhesive (50) provided on the back side of the film along at least a portion of the outer perimeter of the film generally surrounding the transparent window (20), having a thickness sufficient to space the film near but not in contact with the touch screen portion, for removably mounting the protector upon an outer perimeter of the front face to form a space between the transparent window (20) of the film (30), the adhesive and the touch screen portion of the device. A method for protecting a touch screen of a hand held device is also provided.

## Description

### FIELD OF THE INVENTION

The invention relates to a touch screen protector. In particular, it relates to a touch screen protector that can be easily attached and removed from a hand held electronic device that includes and is operable by a touch screen.

### BACKGROUND OF THE INVENTION

With the ever increasing popularity of the touch screen hand held electronic devices came the demand for effective touch screen protectors. While the beautiful and glossy screen of touch screen hand held electronic devices such as iPad device looks great, in actual use, the amount of fingerprints left behind significantly damages the appearance and display quality of the screen. For this reason, the device is sold with a screen cleaning cloth. As frequent cleaning is not desirable, various screen protecting devices have been suggested.

Several kinds of touch screen protector are currently available. The ZAGG INVISIBLESHIELD™ product is a glare reduction touch screen protector. Its major drawback is the difficulty to apply the protector to a hand held device. The anti-glare INCIPIO™ screen protector often traps dust particles and bubbles even after meticulous cleaning and application. Other touch screen protectors currently available in the market are also unsatisfactory to the consumers, as a result of their tendency to trap air bubbles and dust, even with careful application. When in use, these touch screen protectors are in direct physical contact with the touch screen of the electronic device, either by static or application of adhesives. In the latter scenario, when the screen protectors are removed, diligent cleaning is needed to restore the touch screen to its shining luster. JP 2002328613 relates to a cover sheet comprising a transparent plastic film to protect a display screen, said cover sheet having a spacer comprising countless dots on a surface opposite the aforesaid display screen. US Patent No. 7,070,837 relates to a plastic film screen protector having a slightly roughened surface so that the majority of the film facing an electronic device screen does not substantially touch the screen. As a result, the roughened surface of the protector prevents interference patterns from arising when the film touches the screen.

None of these prior art devices has been found to be completely suitable, such that there is a need in the industry for a touch screen protector that is able to be installed easily and quickly without problems of trapping air bubbles or dust. The touch screen protector of the present invention now satisfies this need.

### SUMMARY OF THE INVENTION

The invention relates to a method for protecting a touch screen of a hand held electronic device having a front face that includes a touch screen portion and a non-functional outer perimeter. In one embodiment, the method of the invention comprises providing a touch screen protector comprising a film having front and back sides, an outer perimeter that essentially corresponds to the non-functional outer perimeter of the front face, and a transparent window that essentially corresponds in size to that of the touch screen portion; and exposed adhesive upon at least a portion of the outer perimeter of the film surrounding the transparent window and removably attaching the touch screen protector upon the outer perimeter of the front face of the device via the exposed adhesive to form a space between the transparent window of the film, the adhesive and the touch screen portion of the device. By using the method of the invention, the touch screen can be attached without causing bubble formation between the transparent window of the film and the touch screen portion of the device. In one embodiment, the exposed adhesive has an adhesive strength which is sufficient to releasably mount the protector onto the device but which enables its removal without leaving adhesive residue on the touch screen portion. The transparent window can be pressed against the touch screen portion of the device for operation of the device while preventing direct contact of a user's fingers with the touch screen portion of the device and reducing visible interference patterns during use.

The exposed adhesive preferably has a thickness sufficient to space the film near but not in contact with the touch screen portion, thereby ensuring that the exposed adhesive in itself constitutes and/or functions as a spacer.

Advantageously, the exposed adhesive has an adhesive strength of 5-50 grams. The exposed adhesive is often provided on a spacer that is adhered to the film by a joining adhesive. When so provided, the joining adhesive has an adhesive strength that is at least 5 times stronger than that of the exposed adhesive. Typically, the joining adhesive has an adhesive strength of 200-2000 grams.

In an embodiment, the exposed adhesive is not applied to the entire outer perimeter of the film. Preferably, the touch screen of the device and the film are each substantially rectangular and the exposed adhesive is provided at least upon the top and bottom portions of the outer perimeter of the film.

Preferably, the film is a plastic film. It is advantageous to provide micro-particles on the back side of the plastic film at a density which is sufficiently high to provide an anti-static effect without adversely affecting quality of images viewed through the film. It is also advantageous to provide micro-particles on the front side of the plastic film in an amount effective for providing anti-glare and anti-static effects to the film.

The invention also provides use of a touch screen protector to protect a touch screen of a hand held electronic device having a front face that includes a touch screen portion and a non-functional outer perimeter. The touch screen protector comprises a film having front and back sides, an outer perimeter that essentially corresponds to the non-functional outer perimeter of the front face, and a transparent window that essentially corresponds in size to that of the touch screen portion; and exposed adhesive upon at least a portion of the outer perimeter of the film surrounding the transparent window. In one embodiment, the touch screen protector is removably attached upon the outer perimeter of the front face of the device via the exposed adhesive to form a space between the transparent window of the film, the adhesive and the touch screen portion of the device. Advantageously, the touch screen is attached to the front face of the device without causing bubble formation between the transparent window of the film and the touch screen portion of the device. In one embodiment, the exposed adhesive has an adhesive strength which is sufficient to releasably mount the protector onto the device but which enables its removal without leaving adhesive residue on the touch screen portion. The transparent window can be pressed against the touch screen portion of the device for operation of the device while preventing direct contact of a user's fingers with the touch screen portion of the device and reducing visible interference patterns during use.

The invention further provides a touch screen protector for a touch screen of a hand held electronic device having a front face that includes a touch screen portion and a non-functional band. This touch screen protector includes various features described herein alone or in combination for protecting the touch screen.

In an embodiment, the exposed adhesive has a thickness of between about 0.05 and about 1 mm, and the film has a thickness of between 0.1 and 2 mm and includes an opaque band about its periphery that receives the exposed adhesive or adhesive/spacer combination. Typically, the exposed adhesive is present to provide coverage of at least 20% of the area of the non-functional band of the touch screen. Preferably, coverage of at least 50% of that area is provided in either a continuous or discontinuous, uniform or non-uniform design.

The exposed adhesive is advantageously applied in the form of lines, islands, segments or other non-uniform or discontinuous arrangements. Preferably, the exposed adhesive is applied substantially about the entire perimeter of the non-functional band of the touch screen.

The touch screen protector of the invention typically includes a backing member to protect the back side of the film and the exposed adhesive prior to use. Preferably, the backing member further includes a tab to assist in the removal of the backing member when mounting the protector on the device.

It is also desirable for the touch screen protector of the invention to further comprise one or more alignment holes that match one or more buttons on the electronic device to facilitate mounting of the protector on the device. Preferably, the touch screen of the device and the film are each substantially rectangular and the touch screen is part of a telephone, reading device, music device, viewing device or navigation device.

The film may include at least two layers, and the transparent window is usually clear but can include a coating that provides a matte effect or a privacy screen feature.

The invention also provides an improvement for a hand held, touch screen electronic device having a front face that includes a touch screen portion and an outer perimeter that is non-functional, which comprises providing a touch screen protector of the invention for attachment to the touch screen portion of the device so that the touch screen can be attached without causing bubble formation between the transparent window of the film and the touch screen portion of the device.

### BRIEF DESCRIPTION OF THE DRAWINGS

Figures 1A-D are schematic diagrams of assembling a touch screen protector of the invention with an iPad device;
Figure 2 is a front view of the touch screen protector of Figure 1;
Figure 3 is an expanded partial sectional view of the touch screen protector of Figure 2 to illustrate the spacer; and
Figure 4 is a back view of the touch screen protector with a portion of the backing member removed.

### DETAILED DESCRIPTION OF THE INVENTION

The following definitions are used in this disclosure:
The term "near" as used herein means close in distance but not in physical contact, preferably about or less than 1 mm apart.

The term "periphery" as used herein means the outermost part or region within a precise boundary.

The term "non-functional band" as used herein means the area that surrounding the touch screen portion of the hand held electronic device which is made of a different material or made of the same material as the touch screen portion but is not touch sensitive.

The term "front face" of the device refers to the exposed surface of the device. The touch screen is generally made of a glass or plastic sheet that includes the exposed surface for both the operable touch screen portion and the non-functional band around the perimeter of the touch screen portion.

The term "matte" as used herein means a surface finish which reflects back only a small portion of the incident light shined upon it.

The term "anti-static" is used to mean that the film does not generate static electricity when contacted or rubbed by the user.

The term "substantially" when applied to a number or amount is deemed to be at least 90% or more of the value. When applied to a shape or configuration, the term means up to or within ± 10%.

The invention relates to a novel touch screen protector including a film, preferably a plastic film, and an exposed adhesive provided along the outer perimeter of the film. Unlike most of the prior art touch screen protectors which are in direct physical contact with the touch screen, the touch screen protector of the present invention does not touch the operable portion of the touch screen. Such portion is referred to herein as the "touch screen portion." This critical feature of the present invention makes it possible for the screen protector to be 100% bubble free.

Although varying from device to device, the distance between the touch screen protector and the touch screen portion of the hand held device is determined by the thickness of the adhesive, which is less than that of the film. In a preferred embodiment, the adhesive of the present invention has a thickness that is less than that of the film and is between about 0.05 and about 1 mm, and preferably about 0.05 to about 0.15 mm. The spacing can be as small as possible provided that the protector is not in contact with the touch screen portion when the device is not in use. The stiffness of the film contributes to the desired spacing as the stiffer the film is, the closer the spacing can be. In contrast, the film should not be so stiff as to hinder the user's ability to operate the touch screen portion. The preferred dimensions and properties disclosed herein achieve these features.

The film has front and back sides, an outer perimeter that corresponds to that of the device, and a transparent window. The light transmission of the transparent window is preferably more than 60%, more preferably more than 75%, and most preferably more than 85%. In one preferred embodiment, the film has a thickness of between about 0.15 and about 2 mm and includes an opaque band about its periphery.

The film is sufficiently hard or stiff so that it does not bend or collapse under its own weight to contact the touch screen portion when the protector is applied onto the handheld device and the device is placed horizontally on a flat surface. Preferably, the hardness of the film is more than 1H, as assayed by Pencil Hardness Test. More preferably, the hardness of the film is more than 2H. Most preferably, the hardness of the film is more than 3H. The film is also sufficiently thin to be elastic so that, to operate the touch screen portion, all that is necessary is a gentle force from a user's finger to press any point of the transparent window of the film against the touch screen portion of the hand held device. The film can be made of any suitable transparent material available. In one embodiment, the film is made of a transparent material selected from the group consisting of polyester, polyethylene, polypropylene and polycarbonate, Preferably, the film is a plastic film made of polyethylene terephthalate (PET).

In one embodiment, the film is coated to have a "matte" or anti-glare effect. Surface treatment such as EZ-GLIDE™ surface treatment further allows better touch screen portion maneuverability and effectively reduces finger glide friction on the touch screen portion of the hand held device. Specifically, the EZ-GLIDE™ surface treatment is a technology in which the front side of the screen protector, i.e., the side that contacts the hand, is provided with micro-particles that reduce static effects and allows the hand to move smoothly on the front side of the screen protector.

While prior film products that were to be handled by users may have been considered to require a treatment to reduce electrostatic charges due to rubbing contact, the present inventors found that the provision of an EZ-GLIDE™ micro-particle surface treatment on the back side of the film, i.e., the side of the film facing the touch screen portion, reduces the generation of interference patterns (or Newton's rings) when the protector is pressed against the touch screen portion by the user's finger or fingers. In addition to this desirable anti-Newton ring effect, the EZ-GLIDE™ micro-particle surface treatment on the back side of the film also prevents or avoids producing static electricity effects between the screen protector and the touch screen portion.

The micro-particles are not in physical contact with the touch screen portion unless the screen protector is pressed against the touch screen portion. As a result of the anti-static effects of the micro-particles, the screen protector will quickly bounce back or pull away from the touch screen portion once it is no longer pressed against it. The micro-particles on the back side of the film can be of various shapes, such as the column shape and the wave shape. The density of micro-particles are optimized such that they are high enough for providing anti-static effects but not too high as to adversely affect the quality of images that are viewed through the window. Preferably, the micro-particles cover more than 5% of the film. More preferably, the micro-particles cover more than 8% of the film. Most preferably, the micro-particles cover more than 10% of the film. If desired, the entire film of the protector can be covered with micro-particles, but good results can also be achieved if only up to 50% of the entire film is covered. The micro-particles can be made of any transparent material commonly known in the art. Preferably, the micro-particles are made of PET so that they are compatible with the film material. It is most preferable for the film of the screen protector of the present invention to include micro-particles on both sides so that both the front and back surfaces of the film do not generate static electricity during use.

In one embodiment of the invention, the touch screen protector reduces visible interference patterns during use, as a result of having micro-particles present at the back side of the film.

The touch screen of most electronic devices has a non-functional band, which creates a perimeter border. The screen protector of the present invention is designed so that the exposed adhesive can adhere to this border such that the transparent window enables the full operative portion of the touch screen portion to be used. The opaque band on the film more or less corresponds to the non-functional band of the front face of the device. This is a useful advantage when manufacturing the product, as a separate pigmenting or coloring step on the film is not needed. To assure that the operative touch screen portion is not hindered, the adhesive has a width that is less than that of the border wherever possible. To do this, the exposed adhesive has a width that is 1 to 2 mm less than that of the opaque band. Thus, when the adhesive is properly applied along the outer perimeter onto the back side of the film, it generally surrounds the transparent window but preferably does not touch the latter, thus facilitating proper operation of the touch screen portion of the device. It is not necessary for the adhesive to form a sealed air pocket above the transparent window nor does it have to be applied to completely surround the window.

For devices that have non-functional boundaries that are not uniform, e.g., the iPod Touch, the adhesive of the protector can be configured in the same manner. It is also possible, although not preferred, to include the exposed adhesive only upon a portion of the outer perimeter, such as on top and bottom of a rectangular protector when the side boundaries of the touch screen are very small so that the protector can be mounted on the device without blocking or interfering with the functional touch screen portion of the device. The adhesive is thus provided substantially along the side boundaries of the device. In particular, sufficient adhesive is provided to hold the protector in a fixed position on the screen so that it does not slide or move out of position when touched by a user's fingers during operation of the device. Providing the adhesive along portions of the side boundaries in a discontinuous or intermittent fashion is also acceptable provided that the adhesive is present on areas that amount to at least 20% and preferably at least 50% of the non-functional border. In one embodiment, the adhesive is provided along a substantial portion of the outer perimeter of the film. Advantageously, the discontinuity of the exposed adhesive allows for the bubbles to be pushed out when the touch screen protector is mounted onto the device.

The width of the adhesive may vary along the side boundaries as noted to correspond with the non-functional areas of the touch screen. The adhesive may be provided upon a portion of the outer-perimeter in the form of stripes positioned at various angles to the side boundary of the film where they are provided. In one embodiment, the stripes are perpendicular to the side boundary, with uniform or non-uniform gaps between the adjacent stripes. The adhesive may also be provided in the form of islands, with regular or irregular intervals between the adjacent islands. The exposed adhesive may also be applied in the form randomly shaped and positioned segments or in other non-uniform or discontinuous arrangements which leave open or non-adhesive bearing areas on the non-functional band. The pattern of the adhesive provided on the film is preferably selected to match the non-functional border of the handheld device so that the protector can be mounted on the device without blocking or interfering with the functional touch screen portion of the device.

When the touch screen of the device has a non-functional band about its perimeter, the width of the adhesive is preferably selected to conform to the width of the band so that the adhesive does not interfere with the use of the touch screen portion when the protector is adhesively mounted onto the device. Preferably, the exposed adhesive is applied substantially about the entire perimeter of the non-functional band. The adhesive has a thickness sufficient to space the film near but not in contact with the touch screen portion. The exposed adhesive allows for removably mounting the protector upon the outer perimeter of the touch screen to form a space between the transparent window of the film, the adhesive and the touch screen portion of the device.

The exposed adhesive has sufficient adhesiveness to mount the protector onto the device but enables its removal without leaving adhesive residue on the device. Preferably, the exposed adhesive has an adhesive strength of 5-50 grams. Various adhesives of this type are commercially available and a skilled artisan can select a particular adhesive for the specific application of the protector to any particular device. An adhesive that allows for repeated cleaning and re-application is preferred so that the screen protector can be washed and reapplied repeatedly. Any commercial available washable and reusable adhesives can be used, such as adhesives made of silica, acrylics and polyurethane (PU). In one embodiment, the exposed adhesive is an opaque adhesive strip that is applied onto the back side of the film, preferably received by the opaque band of the film.

In one embodiment, a spacer including at least one opaque adhesive strip is applied onto the back side of the film, preferably received by the opaque band of the plastic film. In addition, the spacer may include at least two strips with the first strip adhesively mounted upon the perimeter of the plastic film and the second strip adhesively mounted upon the first strip whereas the second strip supports the exposed adhesive. The adhesive that is used to mount the spacer to the film and the adhesive that is used to mount the first and second strips together could be any commercially available adhesives for joining films together. Preferably, these adhesives have an adhesive strength of 200-2000 grams, which adhesive strength is at least 5 times and preferably is at least 10 times stronger than that of the exposed adhesive which attaches the protector to the device because the spacer is not intended to be removed from the film. This ensures that the spacer is removed together with the film when the latter is removed from the screen as the spacer is held upon the film with a greater strength than the spacer is held on the screen. The provision of an inner strip that can contain the stronger adhesive on both sides while the outer strip contains the weaker adhesive that eventually contacts the touch screen on one side facilitates the manufacture of the protection device.

Preferably, the touch screen protector of the invention also comprises a backing member to protect the back side of the film and the exposed adhesive. The backing member may further include a tab to assist in the removal of the backing member when mounting the protector. By grasping and pulling on the tab, the backing member is easily removed from the protector to enable it to be mounted upon the device by contact of the exposed adhesive to the non-functional border of the touch screen of the device.

As many of these types of electronic devices include one or more operational buttons on the touch screen operative portion or border for performing functions such as on-off switching between internet browsers, photos, music or e-mail, the touch screen protector of the invention may further comprise one or more holes that match the one or more buttons on the electronic device. In addition to exposing the buttons for ease of operation, these holes act as alignment features to facilitate proper mounting of the film on the touch screen.

Although the touch screen protector can be of any shape, they are preferably substantially rectangular to conform to the shape of current handheld devices, and most of those devices have a substantially rectangular shape. In particular, the shape of the protector is not exactly rectangular as the corners are rounded to match those of the devices. Thus, the touch screen protector can be used to protect touch screens of many different kinds of handheld electronic devices, such as a mobile telephone, reading device, music device, viewing device or navigation device. Examples of such devices are iPhone, Nook, iPod, iPad, Droid, and GPS navigation systems. The nature of the protector and its design enable specific embodiments to be adapted to conform to the touch screen of any such device.

The touch screen protector of the present invention has the advantage of being able to be installed easily and quickly, e.g., within 30 seconds or less. As the touch screen protector of the present invention is to be gently applied to the non-functional border that typically surrounds the touch screen portion of a hand held device, there is no concern for leaving glue traces on the touch screen portion. Thus, the touch screen protector of the invention can be easily and readily removed without any adverse effect on the appearance and display quality of the touch screen portion of the hand held device.

Advantageously, when the hand held device is protected by the touch screen protector of the invention, fingerprint smudges on the touch screen portion are reduced, with minimal impact on the quality of the display, and the touch response of the screen. It would even allow the use of a capacitive stylus when using art applications on the hand held device.

In addition, the touch screen protector of the present invention also reduces the glare of a glossy touch screen portion. As a result, the photos on the touch screen portion look like prints. There is almost no effect on the crispness of the touch screen portion even though the glare is substantially removed. Owing to the finger print resistance feature of the touch screen protector of the present invention, smudge on the touch screen portion is substantially reduced.

### EXAMPLES

### Example 1: Protecting an iPad

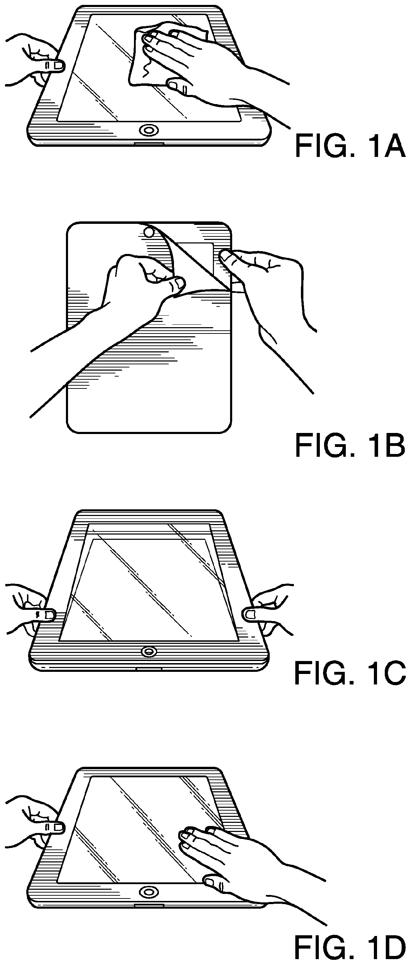

The protector of the invention may be made for use with Apple's iPad as an anti-reflective screen protector specifically designed to protect iPad's touch screen while reducing fingerprint smudging. The protector can be installed in seconds without any air bubbles, unlike other screen protectors that require tedious installation procedures and often result in unwanted air bubbles or hinder touch screen performance. As shown in the schematic diagrams of Figures 1A-D, the installation procedure is as follows. First, the screen of the iPad is cleaned by using the microfiber cloth included in the package to wipe away any dust particles on the iPad screen (Figure 1A). Second, the backing member is peeled off gently before applying the plastic film to the non-functional boundary of the iPad screen (Figure IB). Third, the protector is aligned starting at the bottom, with the circular opening of the protector placed over iPad's "home" button (Figure 1C). Finally, gentle pressure is applied around the borders of the protector so that it is secured in place on the iPad (Figure ID).

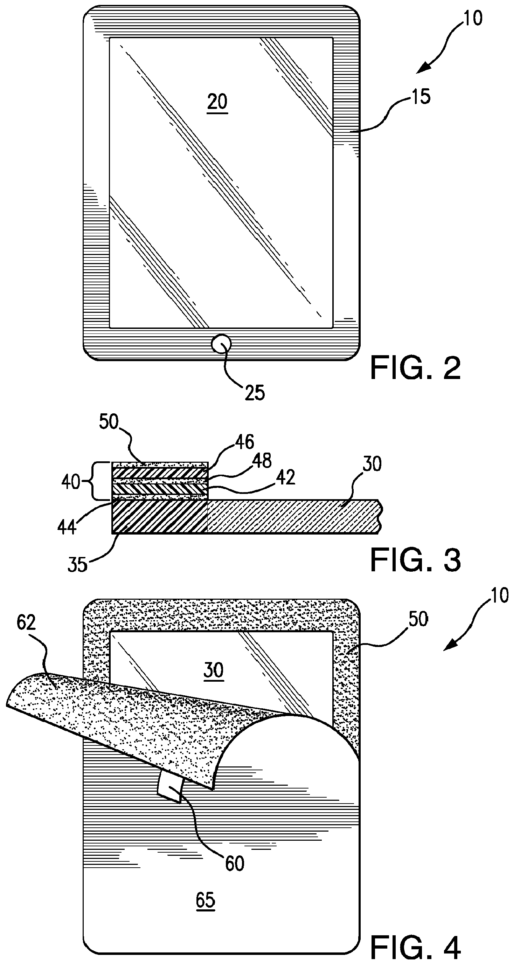

Further details of the protector and its construction are shown in Figures 2-4. As shown in Figure 2, the protector 10 is generally rectangular and has an opaque band 15 around its perimeter. The band essentially conforms to the non-functional band that surrounds the touch screen of the iPad, while the transparent window 20 corresponds to the functional portion of the touch screen of the iPad. The protector includes a hole 25 that corresponds to the on-off selector button of the iPad. In a preferred embodiment, a spacer comprising the exposed adhesive is on provided the back side of the plastic film and is not visible due to the presence of the opaque band. Alternatively, the adhesive may be applied directly upon portions or all of the band.

Figure 3 is an expanded cross-sectional view of the spacer. The plastic film is shown as 30 with the opaque band shown as 35. The spacer is shown as 40 and it includes the first strip 42 adhered to the plastic film 30 by adhesive 44, and the second strip 46 adhered to the first strip 42 by adhesive 48. The exposed adhesive 50 is shown on the spacer.

Figure 4 is a view of the back side of the protector 10 as the backing member 65 is removed for application of the protector to the iPad. As shown, tab member 60 has been pulled to detach backing member 65 from spacer 50 , thus showing the inside surface 62 of the backing member and the back side of the plastic film 30 behind the transparent window as well as the exposed adhesive 50 of the spacer. The backing member 65 is completely removed before the protector 10 is applied to the iPad.

As the screen protector does not touch the touch screen portion of the iPad, it can be easily removed without leaving any residue on the touch screen portion. The adhesive also does not leave any residue on the non-functional border due to its relatively low adhesivity. The touch screen protector provide excellent touch screen portion maneuverability and scratch/smudge resistance while retaining optimal touch screen portion sensitivity and feedback.

### Example 2: Protecting an iPhone 4

Another protector can be specifically adapted for Apple's iPhone 4 touch screen. The protector is sized to conform to the touch screen and is applied in a similar manner as for the iPad. First, the iPhone 4 is cleaned by using the microfiber cloth included in the package to wipe away any dust particles on the iPhone 4's screen. Second, the protector's backing member is peeled off gently before applying the plastic film to the boundaries of the iPhone touch screen. Third, the protector is properly aligned on top of the iPhone touch screen. Finally, pressure is gently applied around the borders of the protector to secure it in place. Again, the touch screen protector provides excellent touch screen portion maneuverability and scratch/smudge resistance while retaining optimal touch screen portion sensitivity and feedback.

### Example 3: Plastic films for the touch screen protectors

The plastic films are made with the following specifications:

| | |
|---|---|
| Structure | HC (Matt) --- PET (188µm) --- HC (Matt) |
| Total light transmittal | ≥ 89.0% |
| Haze | 10.5 ± 2.0 % |
| Pencil Hardness | ≥ 3H |
| Steel wool abrasion test | No scratches |
| Adhesion | 0% Peel |
| Wetting tension test | ≥ 33mN/m |
| Foreign matter contaminations | Diameter < 0.2 mm (ignored) |
| | Diameter ≥ 0.2 mm (≤ 0.5/m²) |
| Scratch | None (W≥ 0.1 mm & L≥ 1.5 mm) |

To ensure the quality of the film, several tests such as cross cut tape test are carried out as follows:
First, cut the surface of the film with utility knife horizontally and vertically for 11 lines each to make one hundred 1 mm x 1 mm squares on the film. Then, apply more than 20mm long Nichiban Celofan Tape (Nichiban No. 405) on the cut surface and press with finger. Afterwards, pick up the tape end and remove the tape to 60° angle/0.5-1 mm to see if any coating comes off.

In both Examples 1 and 2, the protector can be removed for cleaning and re-application as necessary. The protector can be cleaned by rinsing with water and air drying. Small amounts of dishwashing detergent can be applied if necessary. Any debris or dust caught on the touch screen portion can be first brushed away. Once done rinsing, the protector is placed, adhesive side up, onto a towel and allowed to air dry. After it is completely dry and clean, it can be reapplied to the device.

## Claims

1. A touch screen protector (10) for a touch screen of a hand held electronic device having a front face that includes a touch screen portion and a non-functional band, comprising:
a film (30) having front and back sides, an outer perimeter that essentially corresponds to that of the front face, and a transparent window (20) that essentially corresponds in size to that of the touch screen portion; and exposed adhesive (50) upon at least a portion of the outer perimeter of the film (30) surrounding the transparent window (20); and
wherein the touch screen protector (10) is removably attached upon the outer perimeter of the front face of the device via the exposed adhesive (50) to form a space between the transparent window (20) of the film (30), the adhesive and the touch screen portion of the device, wherein the touch screen is attached without causing bubble formation between the transparent window (20) of the film (30) and the touch screen portion of the device;
wherein the exposed adhesive (50) has an adhesive strength which is sufficient to releasably mount the protector (10) onto the device but which enables its removal without leaving adhesive residue on the touch screen portion, and
wherein the transparent window (20) can be pressed against the touch screen portion of the device for operation of the device while preventing direct contact of a user's fingers with the touch screen portion of the device and reducing visible interference patterns during use.

2. The touch screen protector (10) of claim 1, wherein the exposed adhesive (50) has an adhesive strength of 5-50 grams.

3. The touch screen protector (10) of claim 1, wherein the exposed adhesive (50) is provided on a spacer that is adhered to the film (30) by a joining adhesive (44,48), and wherein the joining adhesive (44,48) has an adhesive strength that is at least 5 times stronger than that of the exposed adhesive (50) and has an adhesive strength of 200-2000 grams.

4. The touch screen protector (10) of claim 1, wherein the exposed adhesive (50) has a thickness sufficient to space the film (30) near but not in contact with the touch screen portion, such that the exposed adhesive (50) functions as a spacer.

5. The touch screen protector (10) of claim 1, wherein the exposed adhesive (50) is not applied to the entire outer perimeter of the film (30).

6. The touch screen protector (10) of claim 5, wherein the film (30) is a plastic film (30), the touch screen of the device and the film (30) are each substantially rectangular, and the exposed adhesive (50) is provided at least upon the top and bottom portions of the outer perimeter of the film (30).

7. The touch screen protector (10) of claim 6, wherein micro-particles are present on the back side of the plastic film (30) at a density which is sufficiently high to provide an anti-static effect without adversely affecting quality of images viewed through the film (30) and micro-particles are also adhered to the front side of the plastic film (30) in an amount effective for providing anti-glare and anti-static effects.

8. A method for protecting a touch screen (10) of a hand held electronic device having a front face that includes a touch screen portion and a non-functional outer perimeter, which method comprises:
providing a touch screen protector (10) comprising a film (30) having front and back sides, an outer perimeter that essentially corresponds to the non-functional outer perimeter of the front face, and a transparent window (20) that essentially corresponds in size to that of the touch screen portion; and exposed adhesive (50) upon at least a portion of the outer perimeter of the film (30) surrounding the transparent window (20); and
removably attaching the touch screen protector (10) upon the outer perimeter of the front face of the device via the exposed adhesive (50) to form a space between the transparent window (20) of the film (30), the adhesive (50) and the touch screen portion of the device, wherein the touch screen is attached without causing bubble formation between the transparent window (20) of the film (30) and the touch screen portion of the device;
wherein the exposed adhesive (50) has an adhesive strength which is sufficient to releasably mount the protector (10) onto the device but which enables its removal without leaving adhesive residue on the touch screen portion, and
wherein the transparent window (20) can be pressed against the touch screen portion of the device for operation of the device while preventing direct contact of a user's fingers with the touch screen portion of the device and reducing visible interference patterns during use.

9. The method of claim 8, wherein the exposed adhesive (50) has an adhesive strength of 5-50 grams.

10. The method of claim 8, wherein the exposed adhesive (50) is provided on a spacer that is adhered to the film (30) by a joining adhesive (44,48).

11. The method of claim 10, wherein the joining adhesive (44,48) has an adhesive strength that is at least 5 times stronger than that of the exposed adhesive (50) and has an adhesive strength of 200-2000 grams.

12. The method of claim 8, wherein the exposed adhesive (50) has a thickness sufficient to space the film (30) near but not in contact with the touch screen portion, such that the exposed adhesive (50) functions as a spacer.

13. The method of claim 8, wherein the exposed adhesive (50) is not applied to the entire outer perimeter of the film (30).

14. The method of claim 13, wherein the film (30) is a plastic film (30), the touch screen of the device and the film (30) are each substantially rectangular, and the exposed adhesive (50) is provided at least upon the top and bottom portions of the outer perimeter of the film (30).

15. The method of claim 8, which further comprises providing micro-particles on the back side of the film (30) at a density which is sufficiently high to provide an anti-static effect without adversely affecting quality of images viewed through the film (30).

16. The method of claim 8 or 15, which further comprises providing micro-particles on the front side of the film (30) in an amount effective for providing anti-glare and anti-static effects.

17. Use of a touch screen protector (10) according to any of the preceding claims 1 - 7 for protecting the touch screen of the hand held electronic device.
